# EUROPÄISCHE PATENTSCHRIFT

(11) **EP 1 221 279 B1**
(45) Veröffentlichungstag und Bekanntmachung des Hinweises auf die Patenterteilung: **13.12.2006**
(21) Anmeldenummer: 01130551.3
(22) Anmeldetag: 21.12.2001
(51) Int. Cl.: A01D 41/12

(54) **Überwachungseinrichtung für eine Erntemaschine**
Monitoring device for a harvesting machine
Dispositif de surveillance pour une machine de récolte

(30) Priorität: 08.01.2001 DE 10100521
(43) Veröffentlichungstag der Anmeldung: 10.07.2002
(73) Patentinhaber: DEERE & COMPANY, Moline, Illinois 61265-8098 (US)
(72) Erfinder: Beck, Folker, Dr., Bettendorf, IA 52722 (US)
(74) Vertreter: Holst, Sönke

(56) Entgegenhaltungen:
- EP-A- 0 452 544
- US-A- 3 610 252
- US-A- 4 266 421
- US-A- 6 125 702
- US-A- 6 146 268

## Beschreibung

Die Erfindung betrifft eine Überwachungseinrichtung für eine Erntemaschine, mit mindestens einem Sensor, der zur Bereitstellung eines Signals eingerichtet ist, das eine Information über von Bestandteilen von Erntegut, das die Erntemaschine durchläuft, verursachte Geräusche enthält.

Zum Schutz vor Umgebungseinflüssen werden landwirtschaftliche Maschinen mit immer aufwändigeren, schalldichten Kabinen ausgestattet. Auf verschiedenen Wegen wird zwar versucht, dem Bediener ein Bild über den Maschinenzustand zu geben, wie beispielsweise durch Warnanzeigen für Drehzahlen und den Hydraulikflüssigkeitsdruck. Durch die schallisolierende Kabine kann der Bediener aber die Überwachungs- und Kontrollfunktion für die Maschine schlechter als bei einer Maschine mit offenem Arbeitsplatz aufnehmen, da er die vom Erntegutfluss in der Maschine verursachten Geräusche weniger gut wahrnehmen kann.

In der BG 33 743 ist eine Einrichtung zur physikalischmechanischen Untersuchung von Arbeitselementen eines Traubenpflückers beschrieben. Schwingungen des Geräts werden erfasst und auf einem Oszillographen zur Anzeige gebracht.

Außerdem ist es bekannt (z. B. EP 0 452 544 A), Mähdrescher mit Schwingungsaufnehmern zu versehen, die von Verlustkörnern verursachte Schallwellen erfassen. Die Signale der Schwingungsaufnehmer werden ausgewertet und zur Anzeige des Verlustanteils herangezogen. Als nachteilig ist anzusehen, dass der im Gutfluss liegende Schwingungsaufnehmer den Gutfluss behindert.

Die der Erfindung zugrunde liegende Aufgabe wird darin gesehen, eine verbesserte Einrichtung zur Überwachung der Funktion einer landwirtschaftlichen Erntemaschine zur Verfügung zu stellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt vor, eine Erntemaschine mit einer Überwachungseinrichtung auszustatten, die einen außerhalb des Flusses des Ernteguts angeordneten Sensor umfasst. Das Erntegut trifft somit nicht direkt auf den Sensor, wie bei den bekannten Körperschallsensoren zur Verlustkörnermessung. Anstelle dessen ist der Sensor im Abstand von dem Bereich angeordnet, in dem sich das Erntegut bewegt, und erfasst die von den Bestandteilen des Ernteguts verursachten akustischen Schwingungen der Luft und/oder von Elementen der Erntemaschine. Der Sensor kann an beliebigen Stellen der Erntemaschine angebracht sein, beispielsweise seitlich neben dem Gutfluss, oder oberhalb oder unterhalb des Gutflusses. Auf diese Weise gewinnt man eine Information, ob der Gutfluss sich in erwünschter Weise durch die Erntemaschine bewegt, oder ob unerwünschte Fehler auftreten, die eine durch den Sensor nachweisbare Änderung der vom Gutfluss erzeugten Schallwellen bedingen. Es ist möglich, einen wesentlichen Anteil des Wegs des Ernteguts durch die Erntemaschine (oder den gesamten Weg) akustisch zu überwachen.

Weiterhin wird vorgeschlagen, den Arbeitsplatz der Erntemaschine mit einer Schallwiedergabeeinrichtung beispielsweise in Form eines Lautsprechers, Ohr- oder Kopfhörers auszustatten, der ein Signal des Sensors zugeführt wird. Mit Hilfe der akustischen Prozessüberwachung wird dem Bediener die Möglichkeit gegeben, sich einen Höreindruck vom Materialfluss in beliebigen Elementen der Arbeitsmaschine zu verschaffen. Anhand des Höreindrucks kann eine manuelle Einstellung der Arbeitsmaschine erfolgen.

Durch geeignete Methoden lassen sich charakteristische Geräusche aus dem Frequenzspektrum filtern, die Rückschlüsse auf die jeweiligen Prozesszustände erlauben. Es ist denkbar, die aufgenommenen Signale mit den Signalen einer fehlerlos arbeitenden Erntemaschine zu überlagern (bzw. diese von den Signalen der Sensoren abzuziehen) und wiederzugeben, so dass sich eventuelle Fehler leicht erkennen lassen.

Außerdem kann dem Bediener eine Information über den aus den Signalen des Sensors mittels einer Rechnereinrichtung abgeleiteten Prozesszustand der Erntemaschine auf einer Anzeigeeinrichtung dargestellt werden. Die vom Sensor bereitgestellten Signale können auch zur selbsttätigen Einstellung der Erntemaschine herangezogen werden. Dazu wird das Signal der Sensoren digitalisiert und mit einer Rechnereinrichtung verarbeitet, der in der Regel auch über einen CAN-Bus Informationen über die jeweiligen Einstellungen der Erntemaschine zugeführt werden. Die Rechnereinrichtung steuert die Einstellung von Aktoren der Erntemaschine, beispielsweise die Dreschtrommeldrehzahl, die Größe des Dreschkorbspalts oder die Vortriebsgeschwindigkeit. Deutet das Signal des Sensors zum Beispiel darauf hin, dass vom Feld aufgenommene Steine die Erntemaschine durchlaufen, was anhand charakteristischer Geräusche feststellbar ist, kann die Rechnereinrichtung ein Anheben der Erntegutaufnahmeeinrichtung (Schneidwerk) veranlassen. Das Signal des Sensors kann auch zur Materialflussüberwachung, zur selbsttätigen Regelung der Vortriebsgeschwindigkeit bzw. zur Überwachung der Schnittqualität eines Schneidwerks dienen.

Vorzugsweise verwendet die Rechnereinrichtung das Signal des Sensors und einen Vergleichswert, um einen Signalwert bereitzustellen, der eine Information darüber enthält, ob die Arbeitsmaschine korrekt arbeitet, oder ob eine Einstellung zu ändern ist oder gar ein Fehler der Erntemaschine vorliegt. Bei besonders schwerwiegenden Vorgängen, die die Sicherheit der Erntemaschine gefährden oder sehr große Schäden verursachen, können auch Not-Aus-Funktionen automatisch in Gang gesetzt werden. Es ist auch möglich, einen Vergleich mit Geräuschen einer Erntemaschine mit bekannten Fehlern durchzuführen, die beispielweise bei einem überlasteten Mähdrescher aufgenommen wurden, um eine eventuell vorhandene fehlerhafte Einstellung festzustellen und beheben zu können. Es wäre denkbar, das Signal des Sensors und den Vergleichswert zur Erzeugung des Signalwerts zu verwenden; insbesondere zur Verminderung der benötigten Rechenkapazität der Rechnereinrichtung ist aber bevorzugt, aus dem Signal des Sensors einen Parameter abzuleiten, der in Kombination mit dem Vergleichswert zur Erzeugung des Signalwerts dient. Vorzugsweise wird ein Vergleich zwischen dem Signal (oder einem daraus abgeleiteten Parameter) und dem Vergleichswert durchgeführt. Es sind aber auch andere mathematische Operationen zur Erzeugung des Signalwerts anwendbar.

Bei optimaler Einstellung der Erntemaschine verursacht der Materialfluss bei jeder Fruchtart unterschiedliche, aber typische Geräusche, die von dem Sensor oder den Sensoren aufgenommen werden. Die Rechnereinrichtung beurteilt ausgehend von Sollgeräuschen, die vorzugsweise fruchtartabhängig auswählbar sein können, die tatsächlich vorhandenen Geräusche. Zusätzliche oder fehlende Geräusche werden analysiert und bewertet. Die jeweilige Fruchtart kann vom Bediener eingegeben oder durch einen entsprechenden Sensor ermittelt werden. Wegen der Vielzahl von Fruchtarten und Erntebedingungen kann die Überwachungseinrichtung als lernendes System ausgebildet sein, z. B. mit neuronalen Netzwerken, die Soll-Geräusche erlernen und auf Abweichungen intelligent, d. h. ähnlich wie ein geübter Fahrer reagieren.

Das Signal des Sensors enthält in der Regel nicht nur Informationen über die von Bestandteilen des Ernteguts verursachten Geräusche oder Schwingungen, sondern auch Signalanteile, die durch Bewegungen und/oder Schwingungen von Elementen der Erntemaschine verursacht werden. Als Beispiel seien die Gutbearbeitungselemente, wie Strohschüttler, Rotoren oder Gutförderelemente genannt. Diese Signalanteile können ebenfalls ausgewertet werden, um eventuelle Fehler zu erkennen oder die Einstellung der Erntemaschine zu überwachen oder zu regeln.

Seit einigen Jahren wird in der Mähdrescherforschung versucht, Abscheidesensoren zu entwickeln, die den Körnerstrom messen sollen. Diese arbeiten meist ähnlich wie Verlustsensoren piezoelektrisch. Die Anbringung ist im Materialfluss und verursacht deshalb Probleme mit Verstopfungen. Der erfindungsgemäße, außerhalb des Gutstroms angeordnete Sensor kann auch als Abscheidesensor dienen. Dazu kann er Schwingungen und Geräusche, die von Arbeitselementen, die im direkten Eingriff mit dem Gut sind, verursacht werden, erfassen. Das Kratzen und Schaben von Material ist dort am besten zu hören. Dadurch, dass zur Körperschallmessung die Geometrie der Arbeitselemente nicht wesentlich verändert werden muss, und der Sensor nicht im Materialfluss liegt, hat diese Art der Materialflussbeurteilung Vorteile. Der erfindungsgemäße Sensor hat den Vorteil, dass er kein zusätzliches Hindernis im Materialfluss darstellt wie der herkömmliche Abscheidesensor. Er kann in Funktionselemente der Erntemaschine (z. B. Gutbearbeitungs- oder Gutförderelemente) integriert oder in ihrer Nähe angeordnet werden. Als Beispiel seien Sensoren am Dreschkorb, Abscheidekorb, Schrägförderer oder Strohhäcksler eines Mähdreschers genannt.

Als Sensor wird vorzugsweise ein akustischer Sensor (Mikrofon) oder ein Schwingungsaufnehmer in Form eines Körperschallsensors verwendet, der eine Information über die auf ihn wirkende Beschleunigung bzw. seine Geschwindigkeit oder Lage liefert. Er erfasst die vom Erntegut erzeugten Schallwellen. Es können auch Sensoren Verwendung finden, die Körperschall aufnehmen, der sich in Teilen der Erntemaschine fortpflanzt und/oder von ihnen aufgenommen wird, beispielsweise in Blechen, Rahmenelementen oder anderen (insbesondere tragenden) Teilen. Diese Teile sammeln gleichsam den Körperschall ein, der von vielen Funktionselementen der Erntemaschine und dem verarbeiteten Gut verursacht wird. Durch geeignete Analysenmethoden (z. B. Fourier-Analyse) können die unterschiedlichen Anteile des Schalls den einzelnen Funktionselementen der Erntemaschine und dem Gutfluss zugeordnet werden. Dabei sind korrelierte Signalanteile in der Regel den Funktionselementen der Erntemaschine zuzuordnen und unkorrelierte Signalanteile dem Gutfluss.

Der Vergleichswert des Signals (oder eines Parameters des Signals) des Sensors kann fest abgespeichert sein, z. B. in einem ROM abgelegt. Da sich die Geräusche in der Erntemaschine aber über ihre Lebenszeit verändern können, und häufig auch von der Art des verarbeiteten Guts abhängen, kann ein statischer Vergleichswert zu unrichtigen Fehlermeldungen führen. Es ist daher bevorzugt, die Signale von den Sensoren bei einer fehlerfreien Maschine beispielsweise zu Beginn eines Arbeitsvorgangs aufzunehmen und als Vergleichswert in einem mit der Rechnereinheit verbundenen Speicher abzulegen. Die Rechnereinheit kann auch ein neuronales Netzwerk umfassen, das in der Lage ist, selbst zu erlernen, wie das Spektrum einer einwandfrei arbeitenden Arbeitsmaschine aussieht.

Die erfindungsgemäße Überwachungseinrichtung kann grundsätzlich an jeder landwirtschaftlichen Erntemaschine Verwendung finden. Beispielsweise seien selbstfahrende Erntemaschinen, wie Mähdrescher, Rüben- und Kartoffelroder, Feldhäcksler und Baumwollpflücker genannt. Sie kann aber auch an gezogenen oder angebauten Erntemaschinen oder ihren Vorsätzen Verwendung finden, zum Beispiel an Erntevorsätzen wie Maispflückern, Maisgebissen oder Schneidwerken.

In der Zeichnung ist ein nachfolgend näher beschriebenes Ausführungsbeispiel der Erfindung dargestellt.

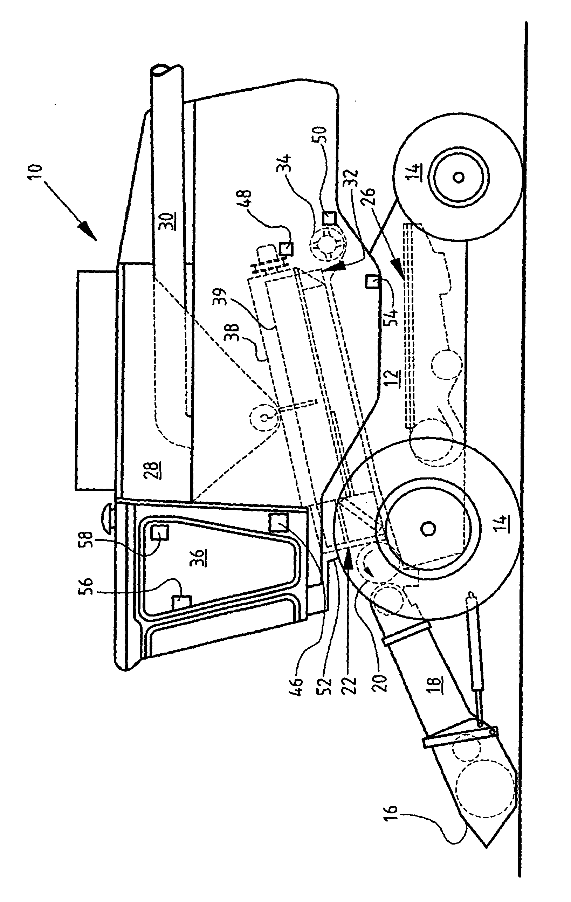

Figur 1 zeigt eine schematische Seitenansicht eines Mähdreschers 10 mit einem Fahrgestell 12 und sich von diesem erstreckenden Bodenlaufrädern 14. Eine Erntegutbergungsvorrichtung 16 in Form eines Schneidwerks wird verwendet, Erntegut aufzunehmen und es einem Schrägförderer 18 zuzuführen. Das Erntegut wird vom Schrägförderer 18 einer Leittrommel 20 zugeführt. Die Leittrommel 20 leitet das Erntegut nach oben durch einen Einlassübergangsbereich 22 an eine Axialtrennvorrichtung 24 weiter.

Die Axialtrennvorrichtung 24 drischt und trennt das geerntete Gut. Korn und Spreu fallen durch Roste am Boden der Axialtrennvorrichtung 24 in ein Reinigungssystem 26. Das Reinigungssystem 26 entfernt die Spreu und führt das saubere Korn einem (nicht gezeigten) Kornelevator zu. Der Kornelevator legt das saubere Korn in einem Korntank 28 ab. Das saubere Korn im Korntank 28 kann durch eine Entladeschnecke 30 in einen Anhänger oder Lastwagen entladen werden. Gedroschenes, vom Korn befreites Stroh wird aus der Axialtrennvorrichtung 24 durch einen Auslass 32 heraus zu einer Abgabetrommel 34 geführt. Die Axialtrennvorrichtung 24 umfasst ein zylindrisches Rotorgehäuse 38 und einen im Rotorgehäuse 38 angeordneten Rotor 39. Die Abgabetrommel 34 wirft das Stroh am rückwärtigen Ende des Mähdreschers 10 aus.

Die Bedienung des Mähdreschers 10 erfolgt von einer Fahrerkabine 36 aus. In der Fahrerkabine 36 ist auch eine Rechnereinrichtung 46 angeordnet, die mit verschiedenen Sensoren verbunden ist:

Ein Sensor 48 ist an der Axialtrennvorrichtung 24 angebracht und erfasst Bewegungen des Rotorgehäuses 38. In der Nähe der Abgabetrommel 34 ist am Fahrgestell 12 ein Sensor 50 befestigt. Oberhalb der Leittrommel 20 ist ein Sensor 52 angeordnet. Ein Sensor 54 ist oberhalb des Reinigungssystems 26 am Fahrgestell 12 angebracht. Die Sensoren 48, 50, und 54 sind an sich bekannte Körperschallsensoren, die Schallwellen erfassen, die sich in den Elementen ausbreiten, an denen die Sensoren befestigt sind. Der Sensor 52 ist ein Mikrofon.

Der Sensor 48 stellt aufgrund seiner Lage primär (hauptsächlich) eine Information über Schallwellen im Rotorgehäuse 38 und durch vom drehenden Rotor 39 verursachte Schwingungen bereit. Ein Teil dieser Schwingungen wird durch das in der Axialtrennvorrichtung 24 bearbeitete Gut verursacht. Das Signal des Sensors 48 enthält somit eine Information über die Abscheidung des Ernteguts im Rotorgehäuse 38. Der Sensor 50 stellt Informationen über von der Drehung der Abgabetrommel 34 und vom ausgeworfenen Erntegut verursachte Schallwellen im Fahrgestell 12 bereit. Der Sensor 52 erfasst Schallwellen, die die Leittrommel 20 und das dort transportierte Gut erzeugen. Der am Fahrgestell 12 befestigte, als Körperschallsensor ausgeführte Sensor 54 stellt eine Information über sich im Fahrgestell 12 fortpflanzende Schwingungen, Vibrationen und Geräusche bereit, die von allen beweglichen Elementen des Mähdreschers 10 und dem in ihm verarbeiteten Gut verursacht werden.

Die Sensoren 48, 50, 52 und 54 sind elektrisch (oder optisch), vorzugsweise über eine Busleitung, mit der Rechnereinrichtung 46 verbunden. Die Rechnereinrichtung 46 digitalisiert die analogen Signale der Sensoren.

Die Rechnereinrichtung 46 ist mit einer Schallwiedergabeeinrichtung 58 in Form eines Lautsprechers verbunden. Der Schallwiedergabeeinrichtung 58 wird ein Gemisch der digitalisierten Signale der Sensoren 48, 50, 52 und 54 zugeführt, von dem Signale abgezogen werden, die einem ordnungsgemäß arbeitenden Mähdrescher entsprechen. Bei einem nicht optimalen Abscheidevorgang hört der Bediener in der Fahrerkabine 36 ein charakteristisches Geräusch, das ihm eine Verbesserung der Einstellung der Gutbearbeitungs- und Gutförderelemente des Mähdreschers 10 erlaubt.

Außerdem wertet die Rechnereinrichtung 46 die Signale der Sensoren 48, 50, 52 und 54 aus und gibt dem Bediener in der Fahrerkabine 36 auf einer Anzeigeeinrichtung 56 einen Anzeigewert wieder, der eine Information über die Funktion des Mähdreschers 10 enthält, beispielsweise den Anteil der Verlustkörner, der mittels des Sensors 54 und einer geeigneten Prallplatte, auf die die Verlustkörner fallen, erfassbar ist. Auf der Anzeigeeinrichtung 56 erscheint außerdem eine Fehlermeldung, wenn aus den Signalen ein Fehler des Mähdreschers 10 erkennbar ist.

Im Ergebnis ermöglicht die aus den Sensoren 48, 50, 52, 54 und der Rechnereinrichtung 46 aufgebaute Überwachungseinrichtung einen einfache Überwachung des Gutflusses im Mähdreschers 10 und somit eine frühzeitige Erkennung eventueller Fehler.

## Patentansprüche

1. Überwachungseinrichtung für eine Erntemaschine (10), mit mindestens einem Sensor (48, 50, 52, 54), der zur Bereitstellung eines Signals eingerichtet ist, das eine Information über von Bestandteilen von Erntegut, das die Erntemaschine (10) durchläuft, verursachte Geräusche enthält, **dadurch gekennzeichnet, dass** der Sensor (48, 50, 54, 56) außerhalb des Gutflusses angeordnet ist.

2. Überwachungseinrichtung nach Anspruch 1, **gekennzeichnet durch** eine am Arbeitsplatz eines Bedieners angeordnete Schallwiedereingabeeinrichtung (58), die betreibbar ist, vom Sensor (48, 50, 52, 54) bereitgestellte oder daraus abgeleitete Signale akustisch wiederzugeben.

3. Überwachungseinrichtung nach Anspruch 2, **dadurch gekennzeichnet, dass** der Schallwiedergabeeinrichtung (58) ein aus dem Signal des Sensors (48, 50, 52, 54) abgeleitetes, gefiltertes und/oder mit einem Vergleichswert eines Signals überlagertes Signal zugeführt wird.

4. Überwachungseinrichtung nach einem der Ansprüche 1 bis 3, **gekennzeichnet durch** eine das Signal des Sensors (48, 50, 52, 54) empfangende Rechnereinrichtung (46), die betreibbar ist, anhand des vom Sensor (48, 50, 52, 54) bereitgestellten Signals einen Anzeigewert, der einer Anzeigeeinrichtung (56) zugeführt wird, und/oder ein Steuersignal zu erzeugen, das einem angetriebenen bzw. verstellbaren Organ der Erntemaschine (10) zugeführt wird.

5. Überwachungseinrichtung nach Anspruch 4, **dadurch gekennzeichnet, dass** das Signal des Sensors (48, 50, 52, 54) zusammen mit einem Vergleichswert einer einwandfrei arbeitenden oder einer fehlerhaften Erntemaschine (10) verarbeitet wird.

6. Überwachungseinrichtung nach Anspruch 5, **dadurch gekennzeichnet, dass** der Vergleichswert erntegutspezifisch ausgewählt ist.

7. Überwachungseinrichtung nach einem der Ansprüche 1 bis 6, **dadurch gekennzeichnet, dass** das Signal des Sensors (48, 50, 52, 54) auch eine Information über die Bewegung und/oder Schwingung eines Elements der Erntemaschine (10) und/oder die von dem Element der Erntemaschine (10) verursachten Geräusche enthält, insbesondere eines Gutbearbeitungs- und/oder Gutförderelements.

8. Überwachungseinrichtung nach einem der Ansprüche 1 bis 7, **dadurch gekennzeichnet, dass** der Sensor (48, 50, 52, 54) eingerichtet ist, von Arbeitselementen verursachte Geräusche aufzunehmen, die sich mit dem Gutfluss im Eingriff befinden.

9. Überwachungseinrichtung nach Anspruch 8, **dadurch gekennzeichnet, dass** der Sensor (48, 50, 52, 54) als Abscheidesensor wirkt.

10. Überwachungseinrichtung nach Anspruch 8 oder 9, **dadurch gekennzeichnet, dass** der Sensor Geräusche erfasst, die von einem Dreschkorb, einem Abscheidekorb, einem Schrägförderer oder einem Strohhäcksler verursacht werden.

11. Überwachungseinrichtung nach einem der Ansprüche 1 bis 8, **dadurch gekennzeichnet, dass** der Sensor (48, 50, 52, 54) ein akustischer Sensor und/oder ein Bewegungssensor ist.

12. Überwachungseinrichtung nach einem der Ansprüche 1 bis 11, **dadurch gekennzeichnet, dass** der Sensor (48, 50, 52, 54) zur Aufnahme von Körperschall eingerichtet ist.

13. Überwachungseinrichtung nach einem der Ansprüche 5 bis 12, **dadurch gekennzeichnet, dass** die Vergleichswerte vom Sensor (48, 50, 52, 54) aufgenommen und durch die Rechnereinrichtung (46) abspeicherbar sind.

14. Erntemaschine (10) mit einer Überwachungseinrichtung nach einem der Ansprüche 1 bis 13.

## Claims

1. Monitoring device for a harvesting machine (10), having at least one sensor (48, 50, 52, 54) which is designed to provide a signal containing information about noises caused by constituent parts of harvested crop material passing through the harvesting machine (10), **characterised in that** the sensor (48, 50, 54, 56) is arranged outside the flow of harvested crop material.

2. Monitoring device according to claim 1, **characterised by** a sound reproduction device (58) which is arranged in the operator's cab and can be operated to reproduce acoustically signals provided by the sensor (48, 50, 52, 54) or derived therefrom.

3. Monitoring device according to claim 2, **characterised in that** the sound reproduction device (58) is supplied with a signal which is derived from the signal of the sensor (48, 50, 52, 54), filtered and/or superimposed with a comparative value of a signal.

4. Monitoring device according to one of claims 1 to 3, **characterised by** a computer (46) which receives the signal of the sensor (48, 50, 52, 54) and which may be operated to generate a display value, which is supplied to a visual display device (56), on the basis of the signal provided by the sensor (48, 50, 52, 54), and/or to generate a control signal which is supplied to a driven or adjustable element of the harvesting machine (10).

5. Monitoring device according to claim 4, **characterised in that** the signal of the sensor (48, 50, 52, 54) is processed together with a comparative value of a correctly operating or a faulty harvesting machine (10).

6. Monitoring device according to claim 5, **characterised in that** the comparative value is selected specifically for the respective type of crop being harvested.

7. Monitoring device according to one of claims 1 to 6, **characterised in that** the signal of the sensor (48, 50, 52, 54) also contains information about the movement and/or oscillation of an element of the harvesting machine (10) and/or the noises caused by the element of the harvesting machine (10), especially a crop processing and/or crop conveying element.

8. Monitoring device according to one of claims 1 to 7, **characterised in that** the sensor (48, 50, 52, 54) is designed to pick up noises caused by working elements which engage with the flow of harvested crop material.

9. Monitoring device according to claim 8, **characterised in that** the sensor (48, 50, 52, 54) acts as a deposition sensor.

10. Monitoring device according to claim 8 or 9, **characterised in that** the sensor detects noises which are caused by a concave, a separator grate, a slope conveyor or a straw chopper.

11. Monitoring device according to one of claims 1 to 8, **characterised in that** the sensor (48, 50, 52, 54) is an acoustic sensor and/or a movement sensor.

12. Monitoring device according to one of claims 1 to 11, **characterised in that** the sensor (48, 50, 52, 54) is designed for picking up structure-borne noise.

13. Monitoring device according to one of claims 5 to 12, **characterised in that** the comparative values are picked up by the sensor (48, 50, 52, 54) and can be stored by the computer (46).

14. Harvesting machine (10) having a monitoring device according to one of claims 1 to 13.

## Revendications

1. Dispositif de contrôle pour une machine de récolte (10), comportant au moins un capteur (48, 50, 52, 54), qui est conçu pour délivrer un signal qui contient une information sur des bruits générés par des éléments constituants des végétaux à récolter, traversant la machine de récolte (10), **caractérisé en ce que** le capteur (48, 50, 52, 54) est disposé à l'extérieur du flux des végétaux.

2. Dispositif de contrôle selon la revendication 1, **caractérisé par** un dispositif de retransmission acoustique (58), qui est agencé sur le poste de travail d'une personne de service et qui peut être activé pour retransmettre acoustiquement les signaux délivrés par le capteur (48, 50, 52, 54) ou dérivés de celui-ci.

3. Dispositif de contrôle selon la revendication 2, **caractérisé en ce qu'**un signal, dérivé du signal du capteur (48, 50, 52, 54), filtré et/ou superposé à une valeur comparative d'un signal, est acheminé vers le dispositif de retransmission acoustique (58).

4. Dispositif de contrôle selon l'une quelconque des revendications 1 à 3, **caractérisé par** une unité de calcul (46), qui reçoit le signal du capteur (48, 50, 52, 54) et qui peut être exploitée pour générer, à l'appui du signal délivré par le capteur (48, 50, 52, 54), une valeur d'affichage qui est transmise vers un dispositif d'affichage (56), et/ou un signal de commande qui est transmis vers un organe, actionné ou réglable, de la machine de récolte (10).

5. Dispositif de contrôle selon la revendication 4, **caractérisé en ce que** le signal du capteur (48, 50, 52, 54) est traité conjointement avec une valeur comparative d'une machine de récolte (10) travaillant parfaitement ou d'une machine de récolte (10) défectueuse.

6. Dispositif de contrôle selon la revendication 5, **caractérisé en ce que** la valeur comparative est sélectionnée en fonction des végétaux à récolter.

7. Dispositif de contrôle selon l'une quelconque des revendications 1 à 6, **caractérisé en ce que** le signal du capteur (48, 50, 52, 54) contient aussi une information sur le mouvement et/ou l'oscillation d'un élément de la machine de récolte (10) et/ou sur les bruits générés par l'élément de la machine de récolte (10), en particulier un élément de traitement et/ou de transport de la masse végétale.

8. Dispositif de contrôle selon l'une quelconque des revendications 1 à 7, **caractérisé en ce que** le capteur (48, 50, 52, 54) est conçu pour enregistrer des bruits générés par des éléments de travail, qui sont en prise avec le flux de la masse végétale.

9. Dispositif de contrôle selon la revendication 8, **caractérisé en ce que** le capteur (48, 50, 52, 54) agit sous forme de capteur de séparation.

10. Dispositif de contrôle selon la revendication 8 ou 9, **caractérisé en ce que** le capteur enregistre des bruits qui sont générés par un contre-batteur, un séparateur, un convoyeur élévateur ou un hache-paille.

11. Dispositif de contrôle selon l'une quelconque des revendications 1 à 8, **caractérisé en ce que** le capteur (48, 50, 52, 54) est un capteur acoustique et/ou un capteur de déplacement.

12. Dispositif de contrôle selon l'une quelconque des revendications 1 à 11, **caractérisé en ce que** le capteur (48, 50, 52, 54) est conçu pour enregistrer des bruits de structure.

13. Dispositif de contrôle selon l'une quelconque des revendications 5 à 12, **caractérisé en ce que** les valeurs comparatives sont enregistrées par le capteur (48, 50, 52, 54) et sont stockées en mémoire par l'unité de calcul (46).

14. Machine de récolte (10) comportant un dispositif de contrôle selon l'une quelconque des revendications 1 à 13.
